# EUROPÄISCHE PATENTSCHRIFT

(11) **EP 3 017 240 B1**
(45) Veröffentlichungstag und Bekanntmachung des Hinweises auf die Patenterteilung: **19.02.2020**
(21) Anmeldenummer: 14738352.5
(22) Anmeldetag: 22.05.2014
(51) Int. Cl.: F21S 41/176, F21S 41/675

(54) **FAHRZEUGSCHEINWERFER**
VEHICLE HEADLIGHT
PROJECTEUR DE VÉHICULE

(30) Priorität: 04.07.2013 AT 504382013
(43) Veröffentlichungstag der Anmeldung: 11.05.2016
(73) Patentinhaber: ZKW Group GmbH, 3250 Wieselburg (AT)
(72) Erfinder: MITTERLEHNER, Thomas, A-3240 Mank (AT)
(74) Vertreter: Patentanwaltskanzlei Matschnig & Forsthuber OG
(86) Internationale Anmeldenummer: PCT/AT2014/050122
(87) Internationale Veröffentlichungsnummer: WO 2015/000006

(56) Entgegenhaltungen:
- EP-A1- 2 767 751
- EP-A1- 2 767 751
- EP-A1- 2 821 692
- EP-A2- 2 551 154
- WO-A1-2013/001953
- WO-A1-2013/001953
- US-A1- 2003 021 497
- US-A1- 2003 021 497
- US-A1- 2011 063 115
- US-A1- 2011 063 115
- US-A1- 2011 249 460

## Beschreibung

Die Erfindung bezieht sich auf einen Fahrzeugscheinwerfer mit zumindest einer Laserlichtquelle, deren Laserstrahl über einen um zumindest eine Achse verschwenkbaren Mikrospiegel zu einer Leuchtfläche mit einem Lichtkonversionsphosphor umgelenkt wird, um an dieser scannend ein Leuchtbild zu erzeugen, welches über eine Optik auf eine Fahrbahn projizierbar ist, wobei zumindest ein Photosensor bezüglich der Leuchtfläche mit dem Lichtkonversionsphosphor so positioniert ist, dass er in vorbestimmten Auslenklagen des Mikrospiegels, welche Auslenklagen einem Auslenkwinkel entsprechen, einen von der Leuchtfläche ausgehenden Sekundär-Laserstrahl erfasst und zur Abgabe eines Signals eingerichtet ist, welches Signal zur Erkennung der Lage und der Bewegung des Mikrospiegels dient.

Bei Scheinwerfern dieser Art, siehe z. B. WO 2011/141 377A1, US2011249460A1, wird an der Leuchtfläche mit dem Konversionsphosphor z. B. blaues Laserlicht in "weißes" umgewandelt. Der hier verwendete Begriff "Phosphor" ist nicht im chemischen Sinn zu verstehen sondern soll Stoffe umfassen, die Licht einer Wellenlänge bzw. Spektralverteilung in Licht einer anderen Wellenlänge bzw. Spektralverteilung umwandeln kann, eben beispielsweise blaues oder ultraviolettes Laserlicht in ein für einen Scheinwerfer geeignetes Lichtgemisch, vor allem in ein annähernd für das menschliche Auge als "weiß" empfundenes Licht. Bei entsprechender Ansteuerung der Laserlichtquelle und des Mikrospiegels kann über eine Optik eine dem auf der Leuchtfläche erzeugten Leuchtbild entsprechende Lichtverteilung auf die Fahrbahn projiziert werden, das dynamisch an die Fahrbahnsituation, die Fahrgeschwindigkeit und andere Vorgaben anpassbar ist.

Mikrospiegel werden über Aktuatoren in Bewegung versetzt, welche beispielsweise auf elektrostatischer oder piezoelektrischer Basis arbeiten. Die Frequenz der Ansteuersignale wird oft so gewählt, dass sie nahe an der mechanischen Resonanzfrequenz des schwingenden Mikrospiegels zusammenfällt, um dadurch die Dämpfung gering zu halten. Es ist aus rein technischen aber auch aus Sicherheitsgründen erforderlich, ständig Informationen über die Spiegelbewegung bzw. die Spiegellage zur Verfügung zur haben. Daher sind in Mikrospiegeleinheiten oft Sensoren enthalten, welche entsprechende Signale liefern, wobei beispielsweise kapazitive oder induktive Geber verwendet werden können.

Aus der WO 2005 106562 A1 geht ein Laser-Projektionssystem hervor, bei welchem durch einen Mikrospiegel ein moduliertes Projektions-Lichtbündel erzeugt wird, welches durch eine Projektionsöffnung in einem Gehäuse nach außen tritt, um ein Bild zu projizierten. Um zu kontrollieren, ob der Mikrospiegel schwingt bzw. um bei schwingendem Spiegel ein Synchronisationssignal zu erhalten, sind an den Rändern der Projektionsöffnung Photosensoren angebaut, die bei Auftreffen des Laserstrahls ein Signal abgeben. Die Problematik, die mit einer einen Konversionsphosphor aufweisenden Leuchtfläche verbunden ist, kann naturgemäß diesem Dokument nicht entnommen werden.

Die EP 2 490 063A1 offenbart eine um zumindest eine Achse gelagerte Mikrospiegelvorrichtung, die zur Ablenkung eines Laserstrahls dient. Um die Drehstellung des Spiegels messen zu können, ist eine eigene Lichtquelle, z. B. eine LED, vorgesehen, die über einen halbdurchlässigen Spiegel und ein Projektionssystem einen Lichtstrahl auf die Rückseite des Mikrospiegels wirft, der von dort reflektiert wird, den halbdurchlässigen Umlenkspiegel durchsetzt und auf einen Photodetektor auftrifft, um ein Signal zu erzeugen. Der Aufbau dieser Vorrichtung ist wegen der zusätzlichen Lichtquelle, des Projektionssystems für diese und den Umlenkspiegel äußerst aufwendig und benötigt viel Platz. Außerdem ist es erforderlich, dass in dem Substrat der Mikrospiegelanordnung eine Öffnung ausgebildet werden kann, damit der Mikrospiegel auch an seiner Rückseite optisch erfassbar ist.

Bei den Scheinwerfern nach dem Stand der Technik kann zwar die Lage des Mikrospiegels und dessen Bewegung ermittelt werden, doch wird von dem Sensor, welcher die Spiegelposition/Bewegung erfasst, keine Information dahingehend geliefert, ob der Laserstrahl korrekt auf die Leuchtfläche mit dem Phosphor auftrifft. Da weiters den von den Fahrzeugscheinwerfern gebildeten Leuchtbildern gesetzliche Anforderungen und Grenzen gesetzt sind, sollten diese auch mit einfachen Methoden überprüft werden können.

Aufgrund der Anwendung in Scheinwerfern hat man auch mit großen Temperaturunterschieden zu kämpfen, welche zu einem Phasenversatz zwischen Ansteuersignal und Schwingverlauf des Mikrospiegels führen können. Folglich wird der Mikrospiegel nicht mehr richtig abgelenkt und es kommt zu einem fehlerhaften Leuchtbild.

Eine Aufgabe der Erfindung besteht darin, einen Fahrzeugscheinwerfer zu schaffen, der nicht auf in Mikrospiegeleinheiten integrierte Sensoren angewiesen ist und bei dem auf kostengünstige Weise Informationen über die Mikrospiegelposition/Bewegung erlangt werden und dadurch das von dem Fahrzeugscheinwerfer erzeugte Lichtbild in Echtzeit verbessert.

Diese Aufgabe wird mit einem Fahrzeugscheinwerfer der eingangs genannten Art gelöst, bei welchem erfindungsgemäß das Signal als Synchronisationssignal der Lasermodulation und zur Prüfung der Intaktheit der Phosphorkonversionsschicht dient.

Dank der Erfindung erhält man auf einfache Weise nicht nur Informationen hinsichtlich der Bewegung des Mikrospiegels, sondern es ist auch möglich, aus den gewonnenen Signalen Rückschlüsse auf die Intaktheit der Phosphorkonversionsschicht bzw. auf ein Auftreffen des Laserstrahls auf den Phosphor zu ziehen.

Bei einer vorteilhaften Ausführungsform der Erfindung ist vorgesehen, dass der von der Leuchtfläche ausgehende Sekundärstrahl ein reflektierter Teil des primären Laserstrahls ist. Diese Ausführungsform macht sich zu Nutze, dass an der Phosphorkonversionsschicht ein, wenn meist auch nur geringer Teil des auftreffenden Laserstrahls reflektiert, zumindest aber diffus reflektiert wird.

Bei einer anderen Variante ist vorgesehen, dass der von der Leuchtfläche ausgehende Sekundär-Laserstrahl ein die Leuchtfläche durchdringender Teil des primären Laserstrahls ist. Hier kann das Phänomen genutzt werden, dass in vielen Fällen, wenngleich nicht a priori erwünscht, ein geringer Teil des Laserstrahls die Phosphorschicht durchsetzt und an der anderen Seite der Phosphorschicht zumindest diffus austritt.

Falls der Mikrospiegel um zwei Achsen verschwenkbar ist und jedem der den beiden Achsen entsprechenden beiden Schwenkbereichen zumindest ein Photosensor zugeordnet ist, erhält man auch bei einem zweidimensional scannenden Laserstrahl die erforderlichen Informationen hinsichtlich der Spiegelposition bzw. -bewegung.

Dass je zumindest ein Photosensor für den reflektierten Sekundär-Laserstrahl sowie für den die Leuchtfläche durchdringenden Sekundär-Laserstrahl vorgesehen ist, erhält man eine höhere Sicherheit bezüglich der Relevanz der erhaltenen Signale bzw. können zusätzliche Feststellungen hinsichtlich der Intaktheit der Leuchtfläche getroffen werden.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 schematisch verschiedene Auslenklagen eine Mikrospiegels, den Verlauf des Auslenkwinkels sowie den beispielsweisen Verlauf einer Ansteuerspannung des Mikrospiegelaktuators,
Fig. 2a bis 2c eine erste Ausführungsform eines Scheinwerfers nach der Erfindung, bei welcher ein von der Vorderseite der Leuchtfläche mit einem Lichtkonversionsphosphor reflektierter Teil eines Laserstrahls genutzt wird,
Fig. 3a bis 3c eine zweite Ausführungsform eines Scheinwerfers nach der Erfindung, bei welcher ein die Leuchtfläche mit einem Lichtkonversionsphosphor durchsetzender Teil eines Laserstrahls genutzt wird und
Fig. 4 eine dritte Ausführungsform eines Scheinwerfers nach der Erfindung, bei welcher ein von der Hinterseite der Leuchtfläche mit einem Lichtkonversionsphosphor reflektierter Teil eines Laserstrahls genutzt wird.

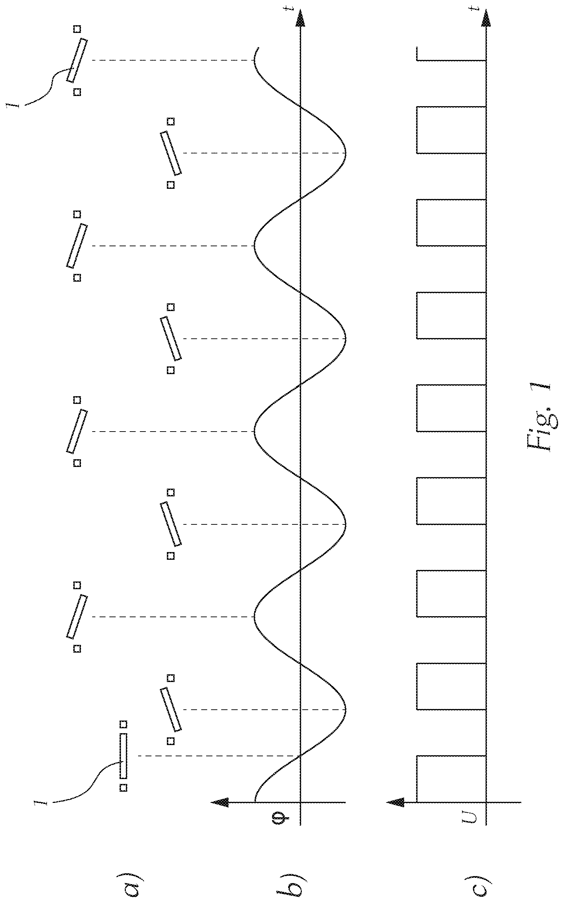

Zunächst wird zum besseren Verständnis der der Erfindung zugrunde liegenden Probleme an Hand der Fig. 1a bis 1c das Verhalten der Auslenkung eines Mikrospiegels in Abhängigkeit von seiner Ansteuerspannung erläutert. In Fig. 1a ist ganz links ein Mikrospiegel 1 in seiner Neutrallage, parallel zu einem nicht gezeigten Substrat dargestellt. Längs der Zeitachse t nimmt der Spiegel 1 verschiedene Schwenklagen ein, welche je einem Auslenkwinkel φ entsprechen (Fig. 1b), dessen zeitlicher Verlauf ein im Wesentlichen sinusförmiger ist. Fig. 1c zeigt den - hier rechteckförmigen - Verlauf einer Ansteuerspannung U des gleichfalls nicht gezeigten Spiegelaktuators.

Wenn der Mikrospiegel 1 zum Schwingen angeregt wird, kann nicht vorhergesehen werden, in welche Richtung er zuerst schwingt. Daher muss diese Richtung über einen Sensor festgestellt werden, damit ein Synchronisieren mit der Ansteuerung des Lasers erfolgen kann.

Bei jeder Extremstellung wird die Spannung U eingeschaltet und bei jedem Nulldurchgang, welcher der Neutrallage entspricht, ausgeschaltet. Dadurch ergibt sich - bei diesem Beispiel - eine zur Schwingfrequenz des Spiegels doppelte Ansteuerfrequenz. Da beim Einschwingvorgang des Mikrospiegels nun nicht sichergestellt oder vorhergesagt werden kann, in welche Richtung er zu schwingen beginnt, muss dies durch einen Sensor ermittelt werden.

Es wird nun auf die Fig. 1a bis 1c Bezug genommen. Diese Figuren zeigen stark vereinfacht einen erfindungsgemäßen Scheinwerfer mit einem Laser 2, welcher einen modulierten Laserstrahl 3 aussendet, wobei dieser Strahl 3 auf einen Mikrospiegel 1 eines Mikroscanners 4 auftrifft und von diesem abgelenkt als reflektierter, primärer Laserstrahl 5 auf eine Leuchtfläche 6 mit einem Lichtkonversionsphosphor auftrifft.

Der Mikroscanner 4 ist üblicherweise als MOEMS (Micro Optical Electro Mechanical System) ausgebildet und hier der Einfachheit halber als um nur eine einzige Achse schwingend gezeigt. Wie bereits erwähnt, ist es jedoch möglich, auch einen um zwei Achsen schwingenden Mikrospiegel 1 zu verwenden.

Das Licht des reflektierten, primären Laserstrahls 5, beispielsweise blaues Licht mit einer Wellenlänge im Bereich von etwa 450 bis 490 nm, wird von dem Phosphor der Leuchtfläche 6 in ein für einen Scheinwerfer geeignetes, möglichst weißes Licht umgewandelt, wobei der scannende Laserstrahl 5 ein Leuchtbild auf der Leuchtfläche 6 erzeugt, das mittels einer Optik 7, beispielsweise einer Linse, auf die Fahrbahn projiziert wird.

Die Erfindung macht sich zunutze, dass üblicherweise nicht der gesamte primäre Laserstrahl 5 in dem Phosphor der Leuchtfläche 6 absorbiert und in Licht einer anderen Wellenlänge umgewandelt wird, sondern ein Teil des Laserstrahls auch als von der Leuchtfläche reflektierter Sekundär-Laserstrahl 8 ausgeht.

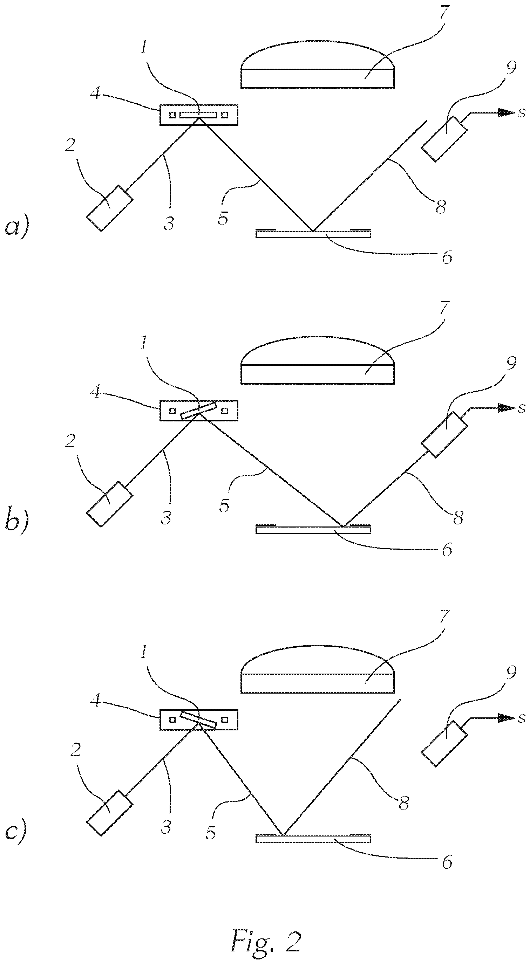

Der Scheinwerfer weist nun einen Photosensor 9 auf, der so angeordnet ist, dass er bei einer bestimmten Auslenklage des Mikrospiegels 1 den von der Leuchtfläche 6 ausgehenden, reflektierten Sekundär-Laserstrahl 8 erfassen und dementsprechend ein elektrisches Signal s abgeben kann. In Fig. 2a befindet sich der Mikrospiegel 1 in seiner Neutrallage und der entsprechende Strahlenverlauf führt nicht dazu, dass der von der Leuchtfläche 6 reflektierte Sekundär-Laserstrahl 8 von dem Photosensor 9 erfasst wird.

Bei einem Verschwenken des Spiegels 1 aus der in Fig. 1a gezeigten Neutrallage in eine erste Extremlage führt der von dem Mikrospiegel 1 ausgehende, abgelenkte, primäre Laserstrahl 5 nach Teilreflexion an der Leuchtfläche 6 zu einem Sekundär-Laserstrahl 8, der auf den Photosensor 9 auftrifft und dementsprechend ein Signal erzeugt, das beispielsweise zur Synchronisation der Laseransteuerung verwendet werden kann.

Fig. 1c zeigt die andere Extremlage des Mikrospiegels 1, bei welcher der teilreflektierte Sekundär-Laserstrahl 8 noch weiter von dem Photosensor 9 entfernt ist als bei der Neutrallage des Spiegels 1 in Fig. 1a.

Man erkennt, dass während des Durchlaufens eines Leuchtbildes jedes Mal an einer bestimmten Position durch den Photosensor 9 das Vorhandensein, d.h. Auftreffen, des primären Laserstrahls 5 erfasst wird. Da bekannt ist, dass der primäre Laserstrahl 5 zu einem bestimmten Zeitpunkt an einem bestimmten Punkt der Leuchtfläche 6 auftreffen muss, können aus dem durch den Photosensor 9 abgegebenen Signal s auch alle anderen Punkte errechnet werden. Falls sich der Laserstrahls zu dem erwarteten Zeitpunkt an dem erwarteten Ort befindet, ist das System in Ordnung und es ist nicht erforderlich, in irgendeiner Weise in die Funktion des Scheinwerfers einzugreifen.

Andererseits erkennt man Fehlfunktionen, wenn zu dem erwarteten Zeitpunkt kein Signal s des Photosensors 9 auftritt. Es kann sein, dass entweder der Laser 2 ausgefallen ist, sich der Mikrospiegel nicht bewegt, z.B. stecken geblieben ist, oder dass sich eine Phosphorschicht von der Leuchtfläche 6 gelöst hat. Diese Zustände führen entweder zu keinem Signal oder zu einem schwachen oder anders gestörten Signal.

Es ist anzumerken, dass die Erfindung selbstverständlich nicht auf das Vorhandensein eines einzigen Photosensors 9 beschränkt ist. Vielmehr könnte beispielsweise ein zweiter Photosensor vorgesehen sein, welcher bei der zweiten Extremlage des Mikrospiegels 1 (Fig. 2c) den reflektierten Sekundär-Laserstrahl 8 erfasst.

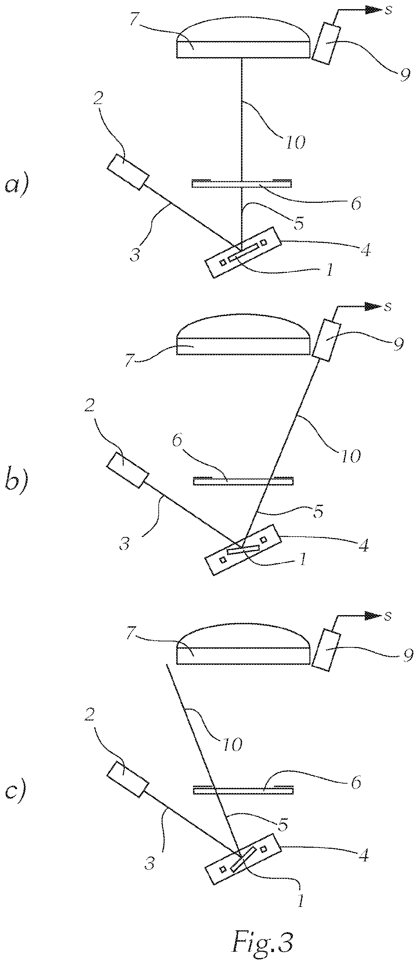

Eine andere Ausbildung der Erfindung ist in den Fig. 3a - c dargestellt, wobei für vergleichbare Teile gleiche Bezugszeichen verwendet werden, wie in Fig. 2. Bei dieser Ausführungsform trifft der modulierte Laserstrahl 3 gleichfalls auf den Mikrospiegel 1 des Mikroscanners 4 und wird von dort als primärer Laserstrahl 5 auf die Hinterseite der Leuchtfläche 6 mit einem Lichtkonversionsphosphor geworfen. Auch hier erzeugt der scannende primäre Lichtstrahl 5 ein Leuchtbild auf der Leuchtfläche 6, welches mittels der Optik 7 auf eine Fahrbahn projiziert werden kann. In dieser Figur ist, ebenso wie in Fig. 2, nicht das von der Leuchtfläche 6 ausgehende, weiße und zur Fahrbahnausleuchtung verwendete Licht gezeigt. Die bei dieser Ausführungsform verwendete Leuchtfläche 6 hat die Eigenschaft, dass sie einen geringen Teil des primären Laserstrahls 5 als Sekundär-Laserstrahl 10 hindurch treten lässt, wobei dafür gesorgt ist, dass von diesem Sekundär-Laserstrahl 10 keine Gefahr für ein menschliches Auge ausgehen kann. Alternativ kann vor die Optik 7 noch ein selektives Filter gesetzt werden, welches das Licht des Sekundär-Laserstrahls 10 zumindest stark abschwächt.

Fig. 3a zeigt wieder die Lage des Sekundär-Laserstrahls 10 bei Neutrallage des Mikrospiegels 1. Bei Auslenkung des Mikrospiegels 1 in eine erste Extremlage, wie in Fig. 3b dargestellt, kann der Sekundär-Laserstrahl 10 auf einen Photosensor 9 auftreffen, der bei diesem Beispiel nahe einer Seite der Optik 7 angeordnet ist. In der in Fig. 3b gezeigten Lage gibt dementsprechend der Photosensor 9 ein Signal s ab.

Bei der anderen Extremlage des Mikrospiegels 1, die in Fig. 3c dargestellt ist, verläuft der Sekundär-Laserstrahl 10, der durch die Leuchtfläche 6 gedrungen ist, an dem anderen Rand der Optik 7 vorbei und trifft nicht auf den Photosensor 9.

Die Funktion ist prinzipiell mit jener der Ausführung nach Fig. 2 vergleichbar. Man erhält ein Synchronisationssignal für die Lasermodulation bzw. kein Signal, falls der Laser 2 ausgefallen oder der Mikrospiegel 1 unbeweglich ist, und man erhält ungewöhnliche Signale, falls die Phosphorschicht der Leuchtfläche 6 beschädigt ist. Auch bei dieser Ausführungsform könnte zumindest ein weiterer Photosensor vorgesehen sein, der beispielsweise die zweite Extremstellung nach Fig. 3c erfasst.

In Fig. 3 ist ein Sekundär-Laserstrahl 10 gezeigt, der eine geradlinige Fortsetzung des primären, auf die Leuchtfläche 6 von hinten auftreffenden Laserstrahls 5 darstellt. Tatsächlich kann es jedoch auch zu einer Brechung und/oder Streuung des Primär-Laserstrahls 5 kommen, so dass der Verlauf des Sekundär-Laserstrahls 10 entsprechend anders aussieht. Dies muss natürlich bei der Positionierung des Photosensors bzw. der Photosensoren Berücksichtigung finden.

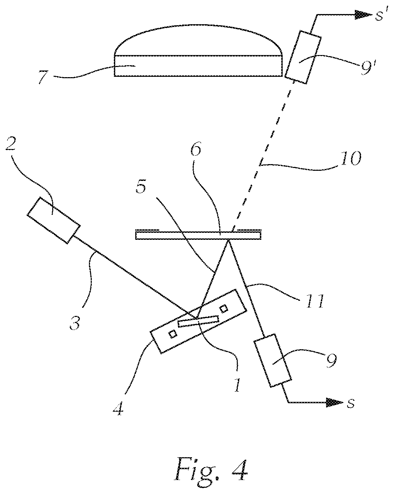

Schließlich ist in Fig. 4 eine weitere Ausführungsform der Erfindung gezeigt, bei welcher, ebenso wie bei der Ausführung nach Fig. 3, die Leuchtfläche 6 an ihrer Hinterseite von dem primären Laserstrahl 5 gescannt wird. Bei dieser Ausführungsform ist jedoch - im Gegensatz zu Fig. 3 - ein Photosensor 9 gleichfalls an der von der Optik 7 abgewandten Seite der Leuchtfläche 6 angeordnet, um einen von der Hinterseite der Leuchtfläche 6 reflektierten Sekundär-Laserstrahl 11 zu erfassen. Die Ausführung nach Fig. 4 stellt somit eine Variante mit Merkmalen der Ausführung nach Fig. 2 und der Ausführung nach Fig. 3 dar, wobei die Funktion mit jener nach den vorangehenden Figuren vergleichbar ist.

Um die Sicherheit bzw. die Redundanz des Systems zu erhöhen, könnte bei der Ausführung nach Fig. 4 noch ein weiterer Photosensor 9' an einer Stelle analog zu der Ausführung nach Fig. 3 vorgesehen sein, um einen strichliert gezeichneten, die Leuchtfläche 6 durchdringenden Sekundär-Laserstrahl 10 zu erfassen. In einem solchen Fall kann der Photosensor 9 die in Zusammenhang mit Fig. 2 bereits genannten Aufgaben erfüllen und der zusätzliche Photosensor 9' kann vor allem dann ein Signal abgeben, wenn der Phosphor der Leuchtfläche 6 beschädigt, z.B. von dieser abgelöst, ist. Wie bereits angedeutet, ist es möglich, dass der zusätzliche Photosensor 9' auch diffuses, an der Leuchtfläche 6 aufgrund eines Fehlers gestreutes Laserlicht aufnehmen und ein entsprechendes Signal als Fehlersignal abgeben kann. Auch bei der Ausführung nach Fig. 4 ist es natürlich möglich, sowohl an der Hinterseite als auch der Vorderseite der Leuchtfläche 6 mehrere Sensoren anzuordnen.

## Patentansprüche

1. Fahrzeugscheinwerfer mit zumindest einer Laserlichtquelle (2), deren Laserstrahl (3) über einen um zumindest eine Achse verschwenkbaren Mikrospiegel (1) zu einer Leuchtfläche (6) mit einem Lichtkonversionsphosphor umgelenkt wird, um an dieser scannend ein Leuchtbild zu erzeugen, welches über eine Optik (7) auf eine Fahrbahn projizierbar ist, **dadurch gekennzeichnet dass**,
zumindest ein Photosensor (9) bezüglich der Leuchtfläche (6) mit dem Lichtkonversionsphosphor so positioniert ist, dass er in vorbestimmten Auslenklagen des Mikrospiegels (1), welche Auslenklagen einem Auslenkwinkel (φ) entsprechen, einen von der Leuchtfläche ausgehenden Sekundär-Laserstrahl (8) erfasst und zur Abgabe eines Signals (s) eingerichtet ist, welches Signal (s) zur Erkennung der Lage und der Bewegung des Mikrospiegels (1) dient, wobei das Signal (s) als Synchronisationssignal der Lasermodulation und zur Prüfung der Intaktheit der Phosphorkonversionsschicht dient.

2. Fahrzeugscheinwerfer nach Anspruch 1, **dadurch gekennzeichnet, dass** der von der Leuchtfläche (6) ausgehende Sekundär-Laserstrahl (8, 11) ein reflektierter Teil des primären Laserstrahls (5) ist.

3. Fahrzeugscheinwerfer nach Anspruch 1 oder 2, **dadurch gekennzeichnet, dass** der von der Leuchtfläche (6) ausgehende Sekundär-Laserstrahl (10) ein die Leuchtfläche durchdringender Teil des primären Laserstrahls (5) ist.

4. Fahrzeugscheinwerfer nach einem der Ansprüche 1 bis 3, **dadurch gekennzeichnet, dass** der Mikrospiegel (1) um zwei Achsen verschwenkbar ist und jedem der den beiden Achsen entsprechenden beiden Schwenkbereichen zumindest ein Photosensor zugeordnet ist.

5. Fahrzeugscheinwerfer nach Anspruch 2 und 3, **dadurch gekennzeichnet, dass** je zumindest ein Photosensor (9, 9') für den reflektierten Sekundär-Laserstrahl (11) sowie für den die Leuchtfläche durchdringenden Sekundär-Laserstrahl (10) vorgesehen ist.

## Claims

1. A vehicle headlight having at least one laser light source (2), whose laser beam (3) is deflected onto a lighting surface (6) having a light-conversion phosphor via a micromirror (1) that can be pivoted about at least one axis in order to generate a light image on said lighting surface in a scanning manner, which light image can be projected onto a roadway via an optics unit (7),
**characterised in that**
at least one photosensor (9) is positioned with respect to the lighting surface (6) having the light-conversion phosphor such that the photosensor detects a secondary laser beam (8) emitted from the lighting surface in predetermined deflection positions of the micromirror (1), which deflection positions correspond to a deflection angle (φ), and is designed to emit a signal (s), which signal (s) serves as a synchronisation signal for the laser modulation, wherein the signal (s) serves as a synchronization signal of the laser modulation and for checking the integrity of the phosphor conversion layer.

2. The vehicle headlight according to Claim 1, **characterised in that** the secondary laser beam (8, 11) exiting from the lighting surface (6) is a reflected part of the primary laser beam (5).

3. The vehicle headlight according to Claim 1 or 2, **characterised in that** the secondary laser beam (10) exiting from the lighting surface (6) is a part of the primary laser beam (5) penetrating the lighting surface.

4. The vehicle headlight according to one of Claims 1 to 3, **characterised in that** the micromirror (1) can be pivoted about two axes and each of the two pivot ranges corresponding to the two axes is assigned at least one photosensor.

5. The vehicle headlight according to Claim 2 and 3, **characterised in that** at least one photosensor (9, 9') is provided for each of the reflected secondary laser beam (11) and of the secondary laser beam (10) penetrating the lighting surface.

## Revendications

1. Phare de véhicule comportant au moins une source de lumière laser (2), dont le faisceau laser (3) est dévié par l'intermédiaire d'un micro-miroir (1) apte à pivoter autour d'au moins un axe en direction d'une surface d'éclairage (6) ayant un luminophore de conversion de lumière, afin de générer sur celle-ci, par balayage, une image lumineuse, laquelle peut être projetée sur une chaussée au moyen d'une optique (7),
**caractérisé par le fait que**
au moins un photodétecteur (9) est positionné par rapport à la surface d'éclairage (6) ayant le luminophore de conversion de lumière de telle sorte qu'il détecte, dans des positions de déviation prédéterminées du micro-miroir (1), lesquelles positions de déviation correspondent à un angle de déviation (φ), un faisceau laser secondaire (8) émis à partir de la surface d'éclairage, et est configuré pour l'émission d'un signal (s), lequel signal (s) sert à reconnaître la position et le déplacement du micro-miroir (1), le signal (s) servant de signal de synchronisation de la modulation de laser et pour vérifier l'intégrité de la couche de conversion de luminophore.

2. Phare de véhicule selon la revendication 1, **caractérisé par le fait que** le faisceau laser secondaire (8, 11) émis à partir de la surface d'éclairage (6) est une partie réfléchie du faisceau laser primaire (5).

3. Phare de véhicule selon l'une des revendications 1 ou 2, **caractérisé par le fait que** le faisceau laser secondaire (10) émis à partir de la surface d'éclairage (6) est une partie du faisceau laser primaire (5) pénétrant dans la surface d'éclairage.

4. Phare de véhicule selon l'une des revendications 1 à 3, **caractérisé par le fait que** le micro-miroir (1) est apte à pivoter autour de deux axes et à chacune des deux régions de pivotement correspondant aux deux axes, est associé au moins un photodétecteur.

5. Phare de véhicule selon l'une des revendications 2 et 3, **caractérisé par le fait qu'**au moins un photodétecteur (9, 9') est prévu pour chacun du faisceau laser secondaire (11) réfléchi et du faisceau laser secondaire (10) pénétrant dans la surface d'éclairage.
